# EUROPEAN PATENT SPECIFICATION

(11) **EP 0 872 321 B1**
(45) Date of publication and mention of the grant of the patent: **06.11.2002**
(21) Application number: 98106859.6
(22) Date of filing: 15.04.1998
(51) Int. Cl.: B29B 17/02

(54) **Method for processing discarded electric motors**
Verfahren zum Verarbeiten von abgelegten Elektromotoren
Procédé pour le traitement des moteurs électriques mis au rebut

(30) Priority: 16.04.1997 JP 11440397
(43) Date of publication of application: 21.10.1998
(73) Proprietor: EBARA CORPORATION, Ohta-ku, Tokyo (JP)
(72) Inventor: Naitou, Takeyuki, Yokohama-shi, Kanagawa-ken (JP); Kozuka, Hiroshi, Yamato-shi, Kanagawa-ken (JP); Nakano, Ryouji, Yokohama-shi, Kanagawa-ken (JP); Miyasaka, Toshihumi, Yokohama-shi, Kanagawa-ken (JP); Nakatani, Ichiro, Kawasaki-shi, Kanagawa-ken (JP)
(74) Representative: Wagner, Karl H., Dipl.-Ing.

(56) References cited:
- DD-A- 222 338
- DE-C- 3 911 490
- KOHNLECHNER R: "COPPER SEPARATION FROM CABLE SCRAP "ECOLOGICAL" RECYCLING OF CABLE SCRAP" PHYSICS TODAY, vol. 61, no. 5, 1 May 1994, page 342/343 XP000442546
- PATENT ABSTRACTS OF JAPAN vol. 097, no. 005, 30 May 1997 & JP 09 001121 A (MITSUBISHI MATERIALS CORP), 7 January 1997
- PATENT ABSTRACTS OF JAPAN vol. 018, no. 601 (C-1274), 16 November 1994 & JP 06 226242 A (HITACHI LTD), 16 August 1994

## Description

### Field of the Invention

The present invention relates to processing methods for discarded electric motors, and relates in particular to a method of processing discarded electric motors to recover high purity copper and high purity iron not contaminated with copper, by removing the copper windings separately from the iron cores.

### Description of the Related Art

Discarded motors have long been dumped in landfill sites, but there is now a strong desire to recycle such discarded motors from the viewpoints of conservation of resources and environmental concerns as well as shortage of available landfill sites. In some cases, discarded motors are handled in a way similar to scrap iron so that such motors are processed in iron smelters, but because of the contamination of iron by copper introduced from copper coils, such an approach results in low-grade iron with a high degree of copper contamination.

To prevent copper contamination, an approach may be possible to disassemble the discarded motor to separate copper components from iron components so as to recover each substance separately, however, this method is currently not practiced in general, because of the high cost of labor-intensive disassembly operations.

Another approach is sometimes taken for recycling motors from discarded home appliances (for example, refrigerators), in which the motors are taken out from discarded home appliances, and using the refurbished motor in other electrical goods and the like. However, this approach has a limited applicability because such goods would generally be regarded as used goods.

Another approach of cryogenic brittle fracture processing has been developed recently such that discarded motors are first subjected to extreme low temperatures before they are pulverized.

However, in the conventional method of cryogenic brittle fracture processing, iron and copper parts become mixed in the first process of brittle fracturing of the entire assembly, and the mixture is later processed to separate iron parts and copper parts from the mixture. It is obvious that this method requires not only a high cost of facilities associated with cryogenic and grinding processing, but the method further requires separation of iron and copper by such means as magnetic separation and air classification. The overall process is complex and it is expected that the process is not only energy-intensive but also cumbersome so that the processing cost would be very high. Further problem with this method is that, because iron and copper parts become mixed in the initial stage, it is very difficult to produce a product of acceptable chemical purity, even though how much effort is expended later to separate the two materials.

DE-C-39 114 90 discloses a method for processing discarded electric motors for recycling comprising the steps of severing transversely the copper windings of a stator core at a frontal or head end thereof in a plane substantially at right angles to a longitudinal rotational shaft of said electric motor, wherein a pulling device is provided for pulling the copper windings out of an insert of the electric motor.

Further, DE-A-222338 discloses a method for recovering nonferrous metals from electric machines by removing the windings of a rotor or stator. A thermal decomposition of the insulation layer is provided and a withdrawal process can be directly coupled with the heating process.

In accordance with the present invention a method as set forth in claim 1 is provided. Preferred embodiments of the invention are disclosed in the dependent claims.

### SUMMARY OF THE INVENTION

It is an object of the present invention to provide a method of processing discarded electric motors to recover high purity copper and iron quickly and at low cost by facilitating separation of copper parts and iron parts in the discarded motors.

The object has been achieved in a method for processing discarded electric motors for recycling comprising the steps of: applying a heat treatment to a discarded motor to soften or burn-off a resin coating fixed to copper windings installed on a stator core of the motor; severing the stator core transversely through copper windings in a plane substantially at right angles to a longitudinal rotation shaft of the motor; and separating copper windings from the stator core.

Accordingly, copper windings can easily be detached from the stator core by heat treating first to soften or burn off the coating on the stator core and then severing the windings wounded on the stator core from a continuous closed loop into U-shaped fragments. The U-shaped fragments are particularly advantageous to be detached without tangling in the stator core grooves.

It is preferable that the step of heat treating to soften or burn-off a resin coating is performed prior to the step of severing a stator core, thereby allowing the windings to be detached by impacting the stator core immediately after severing the stator core to simplify the operation. Also, it may be applicable to soften or burn-off a resin coating is performed subsequent to the step of severing a stator core.

It is preferable that the heat treating is performed in an atmosphere containing no oxygen or substantially no oxygen so as to prevent an oxidation of copper.

It is preferable that the step of separating copper windings be carried out by vibrating or impacting the stator core oriented in such a way that a cutoff surface of a severed stator core faces upward by such means as a magnetic chuck, thereby enabling to detach the windings from the stator core by simple gravity fall.

It is clear that the present method of processing discarded motors for recycling purposes allows to separate only copper wires from a discarded motor through above-mentioned steps, which are relatively simple. It is possible, therefore, to easily and economically separate copper and iron without using labor-intensive processes or high cost equipment to recover high purity copper and iron from the discarded motors.

### BRIEF DESCRIPTION OF THE DRAWINGS

Figure 1 is a cross sectional view of a discarded motor being held in chucks in an embodiment of the method of the present invention.

Figure 2 is a cross sectional view of a half section of the disassembled motor produced in Figure 1 with a magnetic chuck.

Figure 3 is a cross sectional view showing a process of removing the casing from the half motor.

Figure 4 is a cross sectional view of collecting copper coils by gravity drop.

Figure 5 is a cross sectional view of holding half sections in magnetic chucks.

### DESCRIPTION OF THE PREFERRED EMBODIMENTS

Methods of the present invention will be explain in the following with reference to the drawings.

In an embodiment of the method, a discarded motor 1 is comprised by: a casing 2; a stator core (stationary element) 3; and a rotor (rotational element) 4, as in normal motors. The stator core 3 is housed in the casing 2 and the rotor 4 has a motor shaft 5 inserted through its center.

The stator core 3 is produced by winding a plurality of copper wires (to produce coils) 6 on the stator core 3 in a direction parallel to the motor shaft 5, and although windings pattern may differ from one type to another, such as lap or wave windings, the windings are generally fixed to the stator core 3 by casting a polymeric resin.

A first step in processing the motor 1 is a heat treatment step of the motor 1 so as to carbonize and burn off the coating, such as resins and varnish adhering to the coils 6 to be crumbled.

If the motor 1 includes aluminum parts such as slot bars, end rings and cooling fins, then the motor 1 is heated to a temperature, for example, 700 °C, which is higher than the melting point of aluminum, 600 °C. This heat treatment step carbonizes the coating into fragments or vaporizes the coating adhering to the coils 6, and at the same time, melts the aluminum parts so that molten aluminum can flow into the space between the stator core 3 and the rotor 4 to bind the two components 3, 4. For those motors that do not contain aluminum parts, it is sufficient to heat the motor 1 to, say, 300 °C to carbonize or burn off the resin coating.

To prevent oxidation of coils 6, it is preferable to use a low-oxygen atmosphere containing oxygen at about 0-5%. Then, it is enable to heat the motor 1 at 450 °C or higher so as to carbonize or vaporize the resin coating without the oxidation of coil 6.

Such a hot gaseous atmosphere of low oxygen content can be generated by burning waste materials in a gassifier furnace containing less than 1.0 air ratio of air, and combusting the exhaust gas from the gassifier furnace in a high-temperature melting furnace at a temperature of 1300 °C or higher in a low oxygen air ratio. In other words, the exhaust gas from the waste burning contains negligible quantity of oxygen, and the output gas from the melting furnace contains about 5 % or so by volume of oxygen. Therefore, such waste gases are ideally suitable as a heat treatment atmosphere for processing of discarded motors.

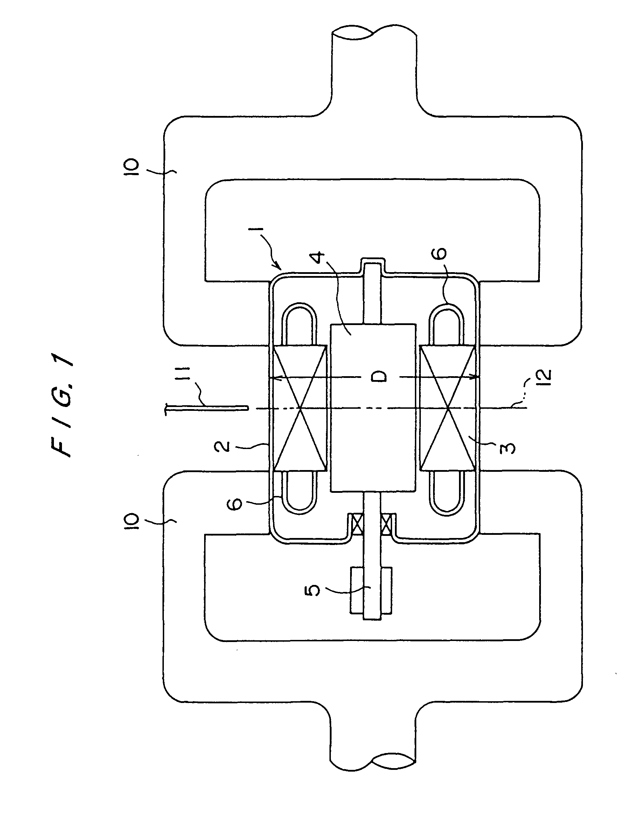

Next, as shown in Figure 1, the ends of the heat-treated motor 1 are held in a pair of chucks 10 about their casing 2 to immobilize the motor 1. Chuck diameters are pre-selected according to the diameter D of the casing 2.

Next, the chucked motor 1 is severed into halved sections 1a, 1b by cutting transversely at right angles to the motor shaft 5 through a cutting plane 12 at a location about half way along the longitudinal direction of the motor shaft 5, using any cutting device 11 such as disc cutter, grinder cutter or cutting bit. Spinning of the rotor 4 may be prevented when the motor is severed, if solidified aluminum binds the stator core 3 and the rotor 4.

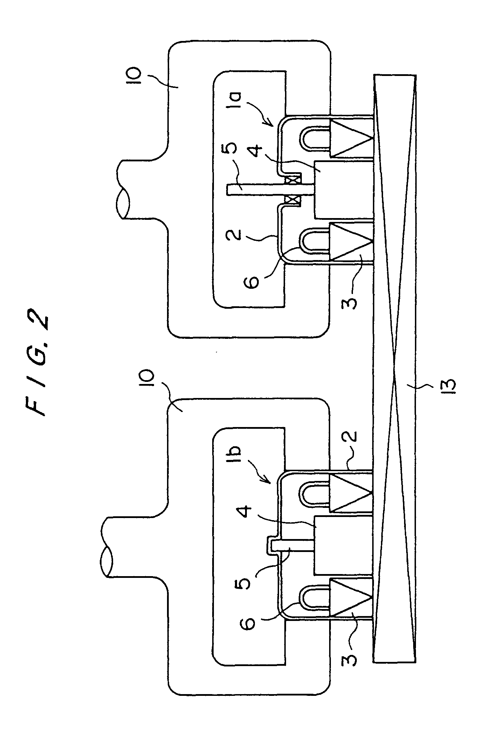

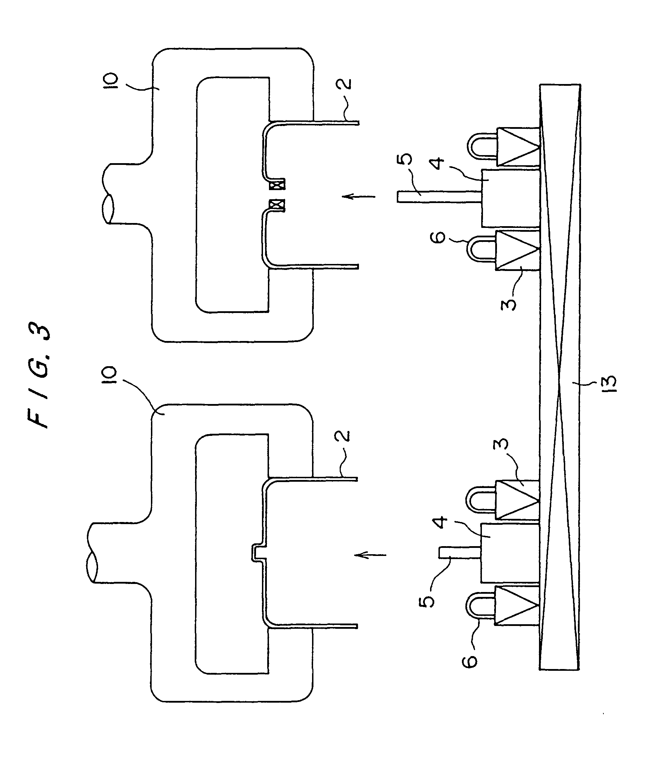

As shown in Figure 2, while the halved motor 1a, 1b are continued to be held in the chucks 10, the cut off surface are now abutted against a magnetic chuck 13 so that the cut off surface of the stator core 3 and the rotor 4 will be magnetically fastened to the surface of the magnetic chuck 13. In this condition, the chuck 10 is moved in a direction away from the magnetic chuck 13, as shown in Figure 3, to detach the casing 2 from the stator core 3 and the rotor 4.

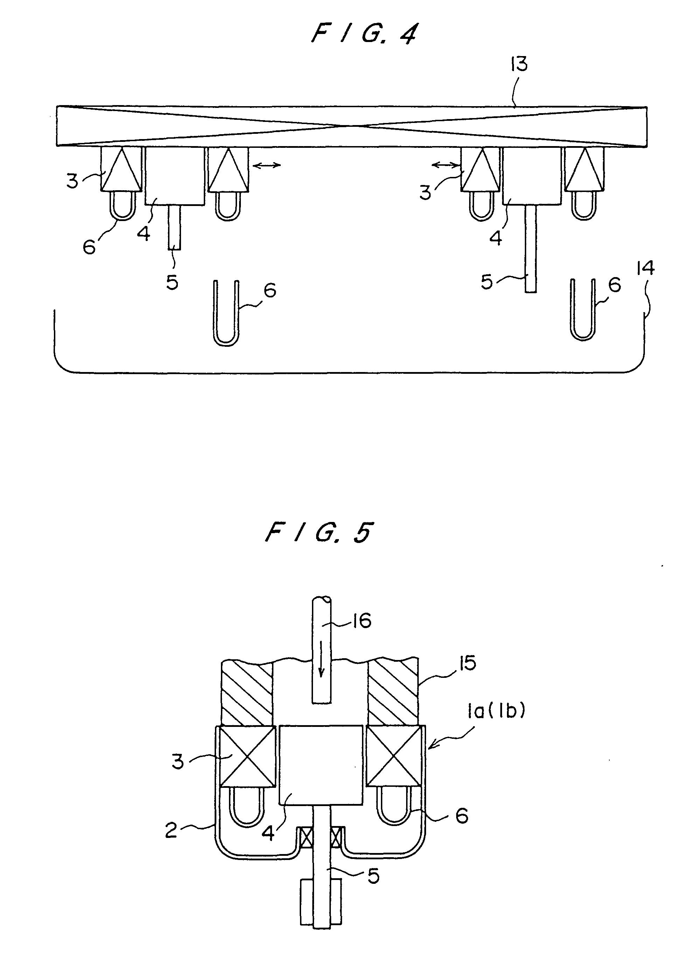

Next, as shown in Figure 4, the magnetic chuck 13 is inverted so that the cut off surfaces of the stator core 3 and the rotor 4 upward, and is transported to a location above a copper receiving vessel 14, and the stator core 3 is vibrated by shaking the magnetic chuck 13 or impacting the stator core 3. Then, because the coils 6 are separated into halves with their loop ends facing downward, the U-shape half loops can readily fall down into the vessel 14 in succession, without becoming hung up in the grooves of the stator core 3. In determining the cutting plane 12, it is not necessary that the plane 12 be at right angle to the motor shaft 5, other suitable angles may be chosen so long as the coils 6 themselves are divided into two U-shaped pieces. The severing does not have to be made in the center of the stator core 3 so long as parting can be made on the coils 6 to produce suitable U-shape divided pieces of wires.

The coils 6 are thus dropped into the vessel 14 and separated from iron parts such as casing 2, stator core 3 and rotor 4, so that copper and iron can be processed separately to recover a pure material of each substance.

This embodiment illustrated a case of removing casing 2 from small motors 1, but if the motor 1 is a large size motor, the casing 2 may be difficult to remove. In such a case, the ends of casing 2 are cut off first to expose the coils 6 and by grasping the ends of the coils 6, the casing 2 and the stator core 3 may be severed along a mid-plane in the longitudinal direction.

The process of severing the stator core is preferably carried out by cutting the casing while the motor is still housed in the casing, or removing the stator core from the casing or exposing the coils by removing parts of the casing. By adopting such an approach, it is possible to utilize a disc cutter or grinder cutter to sever the motor simply and efficiently.

The process of severing the stator core is preferably carried out by chucking the ends of the casing or the stator core so as to immobilize the motor or the stator core in the chuck.

It is also possible to carry out the series of severing steps presented above automatically by means of a robotic apparatus.

By melting aluminum parts in the process of carbonizing or burning a resin coating, the molten aluminum can flow into the spaces between the stator core and the rotor to immobilize the rotor, it is then possible to sever the motor with a disc cutter, for example.

The process of carbonizing or burning the resin coating may be carried out by first exposing the coils and then heating the exposed coils in air. Such a procedure is simple and can be carried out even at a relatively low temperature sufficient to soften the resin coating.

Figure 5 shows another embodiment of the present method. After severing the motor 1 into halved sections 1a, 1b as described above, each half section 1a or 1b is magnetically fixed to a hollow magnetic chuck 15 having a shape to correspond to the cross sectional shape of the severed half sections of the stator core 3 which are oriented downward. In this condition, a piston rod 16, disposed in the center of the hole of the hollow magnetic chuck 15, is lowered into the hole so that the casing 2 and the rotor 4 can both be pushed out from the stator core 3. After this step, the stator core 3 may be vibrated to drop the coils 6 to be collected as before mentioned.

The diameter of the hollow magnetic chuck 15 is pre-selected according to the outer diameter D of the casing 2.

It should be noted that, although the pervious embodiments indicated that the motor is subjected to heat treatment before severing the stator core, it is permissible to severe the stator core first and then to subject the severed halves to heat treatment at a temperature sufficient to soften or burn-off the resin coating.

In other words, whatever method chosen to produce the halved sections, i.e., by exposing the coils by severing the casing and the stator core together first and then removing the casing as described above, or by removing the stator core from the casing and severing the stator core, the halved sections can be subjected to a heat treatment afterwards in air at a relatively low temperature to soften the resin coating, for example 300-500 °C. After this step, the coils are detached from the stator core by any suitable mechanical means.

## Claims

1. A method for processing discarded electric motors (1) for recycling comprising the steps of:
applying a heat treatment to a discarded motor (1) to soften or burn-off a resin coating fixed to copper windings (6) wound on a stator core (3) of said motor, wherein said heat treating is performed in an atmosphere containing no oxygen or substantially no oxygen;
severing said stator core (3) transversely through copper windings in a plane (12) substantially at right angles to a longitudinal rotation shaft (5) of a said motor (1); and
separating copper windings (6) from said stator core (3).

2. A method according to claim 1, wherein said heat treatment is performed at a temperature approximately from 300°C to 700°C.

3. A method according to claim 1, wherein said heat treatment is performed in an atmosphere containing less than approximately 5% of oxygen.

4. A method according to one of claims 1 to 3, wherein said step of heat treatment to soften or burn-off a resin coating is performed subsequent to said step of severing a stator core (3).

5. A method according to one of claims 1 to 4, wherein said step of separating copper windings (6) is carried out by vibrating or impacting said stator core (5) oriented in such a way that a cutoff surface of a severed stator core (5) faces upward.

6. A method according to one of claims 1 to 5, wherein said step of separating copper windings (6) of a stator core (5) is carried out by grasping and pulling copper windings (6) out from said stator core (5).

## Patentansprüche

1. Verfahren zum Verarbeiten von weggeworfenen Elektromotoren (1) zum Recycling bzw. zur Wiederaufbereitung, wobei das Verfahren die folgenden Schritte aufweist:
Anlegen einer Wärmebehandlung an einen weggeworfenen Motor 1 zum Erweichen oder Abbrennen eines Harzüberzugs, der befestigt ist, an Kupferwicklungen (6), die auf einen Statorkern (3) des Motors gewickelt sind, wobei die Wärmebehandlung in einer Atmosphäre durchgeführt wird, die keinen oder im Wesentlichen keinen Sauerstoff enthält;
Durchtrennen des Statorkerns (3) quer durch die Kupferwicklungen in einer Ebene (12) mit im Wesentlichen rechtem Winkel zu einer Längsdrehwelle (5) des Motors (1); und
Trennen der Kupferwicklungen (6) von dem Statorkern (3).

2. Verfahren nach Anspruch 1, wobei die Wärmebehandlung bei einer Temperatur von ungefähr 300°C bis 700°C durchgeführt wird.

3. Verfahren nach Anspruch 1, wobei die Wärmebehandlung in einer Atmosphäre durchgeführt wird, die weniger als ungefähr 5% Sauerstoff enthält.

4. Verfahren nach einem der Ansprüche 1 bis 3, wobei der Schritt der Wärmebehandlung zum Erweichen oder Abbrennen eines Harzüberzugs nach dem Schritt des Durchtrennens eines Statorkerns (3) durchgeführt wird.

5. Verfahren nach einem der Ansprüche 1 bis 4, wobei der Schritt des Trennens der Kupferwicklungen (6) durchgeführt wird durch Vibrieren oder Drücken des Statorkerns (5), der derart angeordnet ist, dass eine Schnittfläche eines durchtrennten Statorkerns (5) nach oben weist.

6. Verfahren nach einem der Ansprüche 1 bis 5, wobei der Schritt des Trennens der Kupferwicklungen (6) von einem Statorkern (5) durchgeführt wird durch Greifen und Ziehen der Kupferwicklungen (6) aus dem Statorkern (5) heraus.

## Revendications

1. Procédé pour traiter des moteurs électriques mis au rebut (1), en vue d'un recyclage, comprenant les étapes consistant à :
appliquer un traitement thermique à un moteur mis au rebut (1) pour ramollir ou éliminer par brûlage un revêtement de résine fixée aux enroulements de cuivre (6) bobiné sur un noyau statorique (3) dudit moteur, ledit traitement thermique étant exécuté dans une atmosphère ne contenant pas l'oxygène ou ne contenant essentiellement pas d'oxygène;
sectionner ledit noyau statorique (3) transversalement à travers les enroulements de cuivre, dans un plan (12) essentiellement perpendiculaire à l'axe longitudinal de rotation (5) dudit moteur (1); et
séparer des enroulements de cuivre (6) à partir dudit noyau statorique (3).

2. Procédé selon la revendication 1, selon lequel ledit traitement thermique est exécuté à une température comprise entre environ 300°C et 700°C.

3. Procédé selon la revendication 1, selon lequel ledit traitement thermique est exécuté dans une atmosphère contenant moins d'environ 5 % d'oxygène.

4. Procédé selon l'une quelconque des revendications 1 à 3, selon lequel ladite étape de traitement thermique pour ramollir ou éliminer par brûlage un revêtement de résine est exécutée à la suite de ladite étape de sectionnement d'un noyau statorique (3).

5. Procédé selon l'une des revendications 1 à 4, selon lequel ladite étape de séparation d'enroulements de cuivre (6) est exécutée par application de vibrations ou d'impacts audit noyau statorique (5) orienté de telle sorte qu'une surface découpée d'un noyau statorique sectionné (5) est tournée vers le haut.

6. Procédé selon l'une des revendications 1 à 5, selon lequel ladite étape de séparation d'enroulements de cuivre (6) d'un noyau statorique (5) est exécutée par saisie et tirage d'enroulements de cuivre (6) hors dudit noyau statorique (5).
